# EUROPÄISCHE PATENTSCHRIFT

(11) **EP 0 579 062 B1**
(45) Veröffentlichungstag und Bekanntmachung des Hinweises auf die Patenterteilung: **14.08.1996**
(21) Anmeldenummer: 93110645.4
(22) Anmeldetag: 03.07.1993
(51) Int. Cl.: C09C 1/36

(54) **Subpigmentäres Titandioxid mit verbesserter Photostabilität**
Subpigmentary titanium dioxide with improved photostability
Dioxyde de titane subpigmentaire à photostabilité améliorée

(30) Priorität: 11.07.1992 DE 4222905
(43) Veröffentlichungstag der Anmeldung: 19.01.1994
(73) Patentinhaber: KRONOS TITAN-Gesellschaft mbH, D-51307 Leverkusen (DE)
(72) Erfinder: Elfenthal, Lothar Dr., D-40764 Langenfeld (DE); Kluwig, Manfred, D-51647 Windhagen (DE); Schwindt, Rolf, Dr., D-51381 Leverkusen (DE)

(56) Entgegenhaltungen:
- EP-A- 0 444 798
- EP-A- 0 499 863
- DE-A- 703 182
- DE-A- 888 292
- FR-A- 865 801
- GB-A- 516 369
- CHEMICAL ABSTRACTS, vol. 113, no. 22, 26. November 1990, Columbus, Ohio, US; abstract no. 192845a, Seite 67 ;
- DATABASE WPI Week 8532, Derwent Publications Ltd., London, GB; AN 85-195284 & SU-A-1 134 585 (DOBROVOLSKII I. P.) 15. Januar 1985
- DATABASE WPI Week 8532, Derwent Publications Ltd., London, GB; AN 85-195284 & SU-A-1 134 585

## Beschreibung

Die Erfindung richtet sich auf ein Verfahren zur Herstellung von subpigmentärem Titandioxid mit erhöhter Photostabilität durch Dotierung, wobei eine hydrolysierbare Titanverbindung in einer Vorlage einer Reife- und Weiterbehandlung unterworfen wird, und auf ein subpigmentäres Titandioxid, enthaltend einen Dotierungsstoff zur Verbesserung der Photostabilität.

Subpigmentäres Titandioxid (Teilchengröße im Bereich von etwa 10 bis 200 nm) kann als ein transparenter UV-Absorber beispielsweise in Lacken, Lasuren, Kunststoffen und kosmetischen Produkten eingesetzt werden. In Metallic-Lacken lassen sich mit subpigmentärem Titandioxid spezielle optische Effekte ("down flop", EP 270 472 A1) erzielen. In der Patentanmeldung P 41 05 345.1 ist ein Herstellungsverfahren für ein subpigmentäres Titandioxid beschrieben, bei dem durch Zugabe eines in einem speziellen Verfahren hergestellten kolloidalen Zinndioxids die Teilchengröße des subpigmentären Titandioxids beeinflußt werden kann.

Es ist von der Verwendung von Titandioxid als Weißpigment (Teilchengröße überwiegend im Bereich 200 bis 500 nm) in Lacken, Fasern, Kunststoffen usw. bekannt, daß durch eine UV-Bestrahlung unerwünschte Reaktionen ausgelöst werden, die zu einer Zersetzung des das Titandioxid-Partikel umgebenden Mediums führen (H. G. Völz, G. Kämpf, H. G. Fitzky, A. Klaeren, ACS Symposium Ser., 151 (1981) 163). Hierbei kann dem Titandioxid eine katalytische Mitwirkung zugeschrieben werden. Die dieser Zersetzung zugrunde liegenden Reaktionen laufen überwiegend an der Oberfläche der Titandioxid-Partikel ab. Der Einfluß von UV-Strahlung auf die Photostabilität eines Pigmentes kann beispielsweise mittels eines Vergrauungstests beschrieben werden.

Da subpigmentäres Titandioxid aufgrund der kleineren Teilchengröße eine ca. 10 bis 20 mal größere spezifische Oberfläche als das pigmentäre Titandioxid hat, ist an ihm eine höhere Photoaktivität bzw. eine kleinere sog. Lichtstabilität zu beobachten.

Es ist weiter bekannt, die Photoaktivität von Titandioxid dadurch zu erniedrigen, daß die Titandioxidpartikel nachbehandelt werden. Üblich ist eine Beschichtung mit Oxiden von Silizium und/oder Zirkonium und/oder Aluminium (z. B. EP 393 857 A1, EP 430 424 A2, JP 02-194 063). Für viele Anwendungen führt eine solche Behandlung von subpigmentärem Titandioxid jedoch nicht zu einer hinreichenden photochemischen Stabilisierung.

Weiterhin ist zur Reduzierung der Photoaktivität bekannt, daß bei der Herstellung von Pigmenten nach dem sog. Sulfat-Prozeß vor der Glühung bestimmte Stoffe zugesetzt werden. Bei einer anschließenden thermischen Behandlung können die abgeschiedenen Metallionen durch Diffusion teilweise in das Kristallinnere der Titandioxidpartikel gelangen. Dieses führt bei Titandioxidpigmenten zu einer Dotierung mit einem Diffusionskonzentrationsprofil.

Darüber hinaus können bei Titandioxidpartikeln, die nach dem Chloridverfahren durch Oxidation von Titantetrachlorid hergestellt werden, durch Zuführung von Dotierungsstoffen in den Brennerraum Dotierungsstoffe, die die Lichtstabilität erhöhen, bzw. die Photoaktivität erniedrigen, direkt intrakristallin in das Titandioxidteilchen eingebaut werden.

Unter intrakristallinem Einbau oder Bulkdotierung soll eine weitgehend homogene Verteilung der Fremdstoffe in den kristallinen Bereichen der Titandioxidpartikel verstanden werden.

Weiterhin ist es bei Pigmenten möglich, Stoffe, die als Dotierungssübstanzen zur Reduzierung der Photostabilität wirken können auf die Titandioxidpartikel aufzufällen und anschließend zu tempern. Da es sich bei diesem Prozeß um eine diffusionskontrollierte Reaktion handelt, muß eine Temperung bei hohen Temperaturen und z.T. langen Zeiten durchgeführt werden (DE 25 45 243; 500-1100 °C, 0,1-10 Stunden).

Eine derartige Arbeitsweise ist für subigmentäres Titandioxid nicht möglich, da bei solchen Bedingungen bereits ein Teilchenwachstum des subpigmentären Titandioxids stattfindet. Darüberhinaus scheidet wegen wirtschaftlicher Gründe eine solche Behandlung aus.

In der JP-A-2 194 064 sind mit Antimonoxiden oder hydroxiden beschichtete TiO₂-Subpigmente beschrieben, wobei bei einer Temperatur von 600 bis 800 °C einzelne Antimonatome auch in das Pigmentinnere diffundiert sein können, eine gleichmäßige Anreicherung im Inneren ist dadurch nicht gegeben.

In der GB-A-516 369 ist die bulk-Dotierung eines TiO₂-Pigmentes mit Niob und Tantal beschrieben. Die Zugabe erfolgt vor der Hydrolyse des Titanylsulfates. Der Niederschlag wird nach üblichen Zwischenschritten bei ca. 1000°C kalziniert. In der FR-A-865 801 ist ebenso wie in der DE-A-888 292 oder der DE-A-703 182 die Zugabe eines Antimonsalzes zu einem früheren Zeitpunkt beim Erzaufschluß behandelt. Bei dieser Vorgehensweise kann kein Subpigment erhalten werden.

Bei subpigmentärem Titandioxid ist es bisher nicht gelungen, einen Dotierungsstoff homogen, intrakristallin in einem Titandioxidpartikel zu verteilen.

Aufgabe der Erfindung ist die Bereitstellung eines subpigmentären Titandioxids mit einer möglichst homogenen Dotierung, d. h. intrakristallinen Verteilung des Dotierungsstoffes zur Verbesserung der Photostabilität, und ein Verfahren zu seiner Herstellung.

Die Aufgabe wird durch ein Verfahren gelöst, das durch folgende Schritte gekennzeichnet ist:
a) ein durch Hydrolyse einer Titanylsulfatlösung hergestelltes Titandioxidhydrat mit Anatasstruktur wird mit Wasser zu einer Suspension mit einer Konzentration von 20 bis 26 Gew.-% Titandioxid aufgeschlämmt;
b) die erhaltene Titandioxidhydratsuspension wird auf 60 bis 70 °C erwärmt;
c) die erwärmte Titandioxidhydratsuspension wird zu einer solchen Menge einer auf 90 bis 100 °C erhitzten wäßrigen Natriumhydroxidlösung unter Rühren zugegeben, bis nach ihrer Zugabe das Gewichtsverhältnis von Natriumhydroxid zu Titandioxid im Gemisch 1,25 bis 1,65 beträgt;
d) das Gemisch wird zum Sieden erhitzt und 120 bis 140 min beim Siedepunkt gehalten;
e) das Gemisch wird auf 50 bis 60 °C abgekühlt und filtriert;
f) der erhaltene Filterkuchen wird so lange gewaschen bis der Sulfatgehalt im Waschfiltrat weniger als 0,05 g/l beträgt;
g) der gewaschene Filterkuchen wird mit Wasser bis zu einem Titandioxidgehalt von 10 bis 25 Gewichtsprozent angeteigt und das erhaltene Gemisch mit einer 20 bis 25 %igen Salzsäure versetzt, bis ein pH-Wert von 2,8 bis 3,1 erreicht ist;
h) das Gemisch wird gerührt, der pH-Wert kontrolliert und ggf. nachgestellt;
i) es werden α % (0 < α ≦ 100) der vorgesehenen Dotierungsmenge zugesetzt, wobei der Dotierungsstoff in 25 %iger Salzsäure gelöst ist;
j) das Gemisch wird auf ca. 60 °C erhitzt und bei dieser Temperatur ca. 40 min belassen;
k) das Gemisch wird mit soviel ca. 25 %iger Salzsäure, in der die restliche Menge (100-α) % des Dotierungsstoffes enthalten ist, bei ca. 60°C versetzt, daß sich ein Gewichtsverhältnis von Salzsäure zu Titandioxid von 0,15 : 1 bis 0,25 : 1 einstellt, wobei die Salzsäuremenge bei Schritt i zu berücksichtigen ist;
l) die Suspension wird langsam erhitzt und größenordnungsmäßig 1 h beim Siedepunkt gehalten;
m) die Suspension wird bei einem pH-Bereich von 4 - 11, vorzugsweise 6 - 8, neutralisiert und in an sich bekannter Weise filtriert, gewaschen, ggf. getrocknet und getempert, gemahlen, anorganisch und/oder organisch nachbehandelt und endgemahlen.

Die Lösung dieses Problems ist der Zusatz des Dotierungsstoffes während der Herstellung des subpigmentären Titandioxids an einer geeigneten Stelle des Prozesses, so daß bereits während der Bildung des subpigmentären Titandioxids eine Dotierung des gesamten Teilchens (Bulkdotierung) erfolgt und die thermische Diffusion überflüssig macht. Bedingung für eine solche Verfahrensweise ist, daß der Zusatz während der Herstellung des subpigmentären Titandioxids weder die Ausbildung der gewünschten Kristallstruktur stört, noch entscheidenden Einfluß nimmt auf die Bildung einer bestimmten Teilchenform oder die Einstellung einer gewünschten Teilchengröße oder Teilchengrößenverteilung.

Gegenstand der Erfindung ist auch ein subpigmentäres Titandioxid, d.h. ein Titandioxid unter 100 nm, enthaltend einen Dotierungsstoff zur Verbesserung der Photostabilität, gekennzeichnet durch den homogen intrakristallinen Einbau des Dotierungsstoffs in das Titandioxidteilchen.

Unter Dotierungsstoff werden Metallionen verstanden, wobei ein Dotierungsstoff auch ein Gemisch aus mehreren Ionenarten sein kann und wobei die Metallionen vorzugsweise in Form ihrer Chloride oder Oxide eingesetzt werden. Folgende Dotierungsstoffe, die die Photostabilität von Titandioxid verbessern, sind brauchbar; dabei ist zuerst die Ionenart genannt und dann die Verbindung, in der sie in der Regel nach Lösen in Salzsäure der hydrolysierten oder teilweise hydrolysierten Verbindung zugegeben werden. Die zugegebene Lösungsmenge ist so bemessen, daß die Atomkonzentration des Dotierungsstoffes bezogen auf Titan vorzugsweise zwischen 0,1 % und 2,0 % liegt. Bei Kombinationen ist die Atomkonzentration der einzelnen Komponenten zu verstehen:
Fe²⁺ als FeCl₂
Fe³⁺ als FeCl₃·4H₂O
Sb³⁺ als SbCl₃
Zn²⁺ als ZnCl₂
Mn²⁺ als MnCl₂·2H₂O
Nb⁵⁺ als NbCl₅
V³⁺ als VCl₃
V⁵⁺ als V₂O₅
Ni²⁺ als NiCl₂·6H₂O
Cu²⁺ als CuCl₂
Ta⁵⁺ als TaCl₅
V³⁺/Nb⁵⁺ als VCl₃/NbCl₅
Mn²⁺/Nb⁵⁺ als MnCl₂·2H₂O/NbCl₅
Fe²⁺/Fe³⁺ als FeCl₂/FeCl₃·4H₂O
Fe²⁺/Fe³⁺/Nb⁵⁺ als FeCl₂/FeCl₃·4H₂O/NbCl₅
Ni²⁺/Sb³⁺ als NiCl₂·6H₂O/SbCl₃
Ni²⁺/Sb⁵⁺ als NiCl₂·6H₂O/SbCl₅.

Bei folgenden Ionen konnte allenfalls eine geringe Veränderung der Photostabilität von subpigmentärem Titandioxid beobachtet werden:
Al³⁺ als AlCl₃·6H₂O
In³⁺ als InCl₃
Ce³⁺ als Ce₂(SO₄)₃
Ce⁴⁺ als Ce(SO₄)₂
Sn⁴⁺ als SnCl₄.

Die als Ausgangssubstanzen in Betracht kommenden hydrolysierbaren Titan-Verbindungen sind anorganische Titanate, Titantetrachlorid, organische Titanverbindungen oder ein mit Salzsäure teilweise hydrolysiertes Natriumtitanat, das durch Umsetzung eines durch Hydrolyse aus Titanylsulfatlösung gewonnenen Titandioxidhydrates mit Natriumhydroxid gebildet wird. Die Reaktion der hydrolysierbaren Titanverbindungen erfolgt in einer Vorlage; die Flüssigkeit in der Vorlage kann Wasser oder mit Säure oder Alkalien versetztes Wasser sein. Die Zugabe des in Säure gelösten Dotierungsstoffes kann vor der Reifebehandlung erfolgen und muß vor der Weiterbehandlung abgeschlossen sein. Die Reifebehandlung ist in der Regel eine Wärmebehandlung. Die Weiterbehandlung umfaßt auch eine Wärmebehandlung und insbesondere die bei anorganischen Titanaten als Ausganssubstanz erforderliche Peptisation. Die Peptisation bewirkt eine weitgehend kolloidale Verteilung des Titandioxides. Der Dotierungsstoff ist in einer Säure gelöst, die auch bei der Weiterbehandlung Verwendung findet; üblicherweise ist das eine einbasige Säure, wie Salzsäure oder Salpetersäure.

Das dotierte subpigmentäre Titandioxid kann einer Temperung und einer üblichen Oberflächenbehandlung mit z.B. anorganischen Oxiden des Si, Zr, Al, Zn etc. unterzogen werden. Darüber hinaus ist es ggf. notwendig, diese Produkte einer Endmahlung unter Zusatz organischer Verbindungen, z.B. Siliconöle, Polyalkohole etc., zu unterziehen.

Zur Chrakterisierung der Lichtstabilität wird hier das Titandioxid einem Vergrauungstest unterzogen.

Die Erfindung ist im folgenden weiter beispielhaft beschrieben. Neben der Herstellung des Subpigmentes und dessen Bulkdotierung und neben Prüfmethoden sind auch Vergleichsbeispiele von nicht dotierten bzw. nur oberflächenbeschichteten Subpigmentteilchen angegeben.

Für den Vergrauungstest wird das pulverförmige Material mit Hilfe eines Labormischwerkzeugs der Firma Collin (Walzwerk 150) in ein PVC-U-System folgender Zusammensetzung eingearbeitet:
1000 g Suspensions-PVC (Solvic 271 GC),
1000 g Emulsions-PVC (Solvic 172 GA),
400 g Polymethylmethacrylat (Degalan V26),
60 g dreibasisches Bleisulfat (Naftovin T3),
20 g zweibasisches Bleistearat (Interstab 3150),
20 g Glyzerinmonoleat (Loxiol G 10).

100 g dieser Grundmischung werden auf das aufgewärmte Labormischwerkzeug gegeben (Walzentemperatur 175 + 5 °C, Umfangsgeschwindigkeit vordere Walze 15 min⁻¹, hintere Walze 18 min⁻¹). Herabfallendes Material wird ständig auf die Walze zurückgegeben bis sich eine zusammenhängende Folie gebildet hat. 3 g Titandioxid werden aufgestreut und bei ständigem Umlegen der Folie eingearbeitet. Nach einer Mischdauer von 10 min wird die Folie abgezogen und in ca. 9 x 9 cm² große Stücke zerschnitten. Die Folienabschnitte werden mit Ethanol gereinigt, in 3 Lagen in einen Schablonenrahmen gelegt und zwischen 2 polierten Chromstahlplatten in einer ölhydraulischen Oberdruckpresse (Temperatur 150 C, Preßdruck 4 N/mm², Preßdauer 4 min, Abkühlphase 8 min) verpreßt. Die erhaltenen Platten werden in Prüflinge von 2,5 x 2,5 cm² zerschnitten, an denen die Belichtungsprüfung vorgenommen wird. Zum Schutz vor unkontrollierter Belichtung werden die Proben dunkel gelagert.

Vor der Belichtung wird die Helligkeit L₀^{*} gemessen. Dann werden die Prüflinge (maximal 20) unter die Klemmschiene des SUNTEST-Gerätes CPS der Firma Heraeus geschoben, mit destilliertem Wasser überflutet und 30 min lang mit dem Xenon-strahler belichtet. Unmittelbar nach dem Ende der Belichtung wird wieder die Helligkeit L₁^{*} mit dem Dreibereichsfarbmeßgerät HUNTERLAB (Meßgeometrie 45°/0°, Normlichtart C, Größe der Meßöffnung 1,2 cm Durchmesser) gemessen. Die Helligkeits-Differenz ΔL* = L₀^{*} - L₁^{*} dient als Maß für die Vergrauung und wird zur Beurteilung der photokatalytischen Aktivität des Titandioxids herangezogen.

### Beispiel 1 (undotiertes subpigmentäres Titandioxid, Vergleichsbeispiel)

220 g einer wäßrigen Suspension eines gewaschenen Titandioxidhydrats der Anatasform, berechnet als TiO₂, das durch Hydrolyse aus einer durch Aufschluß von Ilmenit in Schwefelsäure, Abtrennung von Eisen(II)-sulfat-heptahydrat, Klären und Eindampfen gewonnenen Titanylsulfatlösung erhalten worden ist, werden mit destilliertem Wasser zu einer Suspension mit einem TiO₂-Gehalt von 26 Gew.-% verdünnt und diese Suspension wird auf 60 °C erwärmt.

Die erwärmte Suspension wird im Verlauf von 30 min unter Rühren zu 550 g einer 50 Gew.-% Natriumhydroxid enthaltenden, auf 90 °C erwärmten wäßrigen Lösung zugesetzt. Das erhaltene Gemisch wird dann 2 Stunden am Siedepunkt (etwa 108 °C) gehalten, dann auf etwa 60 °C abgekühlt und filtriert, und der Filterkuchen mit destilliertem Wasser so lange gewaschen, bis der Sulfatgehalt im Waschfiltrat weniger als 0,05 g/l beträgt (SO₄-Nachweis durch BaCl₂-Test).

Eine Menge des gewaschenen Filterkuchens, entsprechend 100 g TiO₂, wird mit destilliertem Wasser zu einer Suspension mit einem TiO₂-Gehalt von 220 g/l angeteigt. Danach wird 25 %-ige Salzsäure zugegeben bis im Gemisch ein pH-Wert von 2,8 bis 3,1 erreicht ist. Die Suspension wird 10 min gerührt, der pH-Wert überprüft und gegebenenfalls korrigiert.

Die Suspension wird auf 60 °C erhitzt und 30 min bei dieser Temperatur belassen. Das Gemisch wird mit soviel 25 %iger Salzsäure versetzt, bis das Gewichtsverhältnis der an dieser Stelle zugesetzten Salzsäure, berechnet als HCl zu TiO₂ 0,15:1 bis 0,25:1 beträgt. Die Mischung wird dann in etwa 30 min zum Sieden erhitzt (Siedetemperatur etwa 108 °C) und 90 min auf der Siedetemperatur gehalten.

Durch Neutralisation mit einer Natriumhydroxidlösung bis zu einem pH-Wert von 6 bis 7 wird das in der Suspension befindliche Titandioxid geflockt und anschließend durch eine Filtration abgetrennt und mit destilliertem Wasser und Natriumsulfatlösung (2,5 g/l, 60-80 °C) chloridfrei gewaschen. In die noch feuchte Filterpaste wird eine Emulsion von Dimethylpolysiloxan eingemischt, entsprechend 2 Gew.-% Siloxan (bezogen auf TiO₂) und anschließend bei 120 °C zwischen 10 und 16 Stunden getrocknet. Das getrocknete Produkt wird einer Mahlung auf einer Labormühle unterzogen.

Eine Hälfte des Produkts wird 2 Stunden bei 500 °C getempert. Der durch eine Kohlenstoffanalyse ermittelte Verlust an organischer Substanz wird durch Zusatz einer entsprechenden Menge Dimethylpolysiloxanemulsion ergänzt und erneut getrocknet und gemahlen.

Das erhaltene subpimgentäre Titandioxid besteht nach der Trocknung aus nadelförmigen, nach der thermischen Behandlung bei 500 °C aus mehr sphärischen Teilchen, deren kristalline Bereiche Rutilstruktur besitzen. Die mittlere Teilchengröße des nadelförmigen Produkts ist 100 nm (längste Achse), die der sphärischen Produkte ist ca. 90 nm.

Dieses undotierte subpigmentäre Titandioxid weist bei dem oben beschriebenen Vergrauungstest nach einer Temperatur-Behandlung von 120 °C ein ΔL* von 41,1, nach einer Temperatur-Behandlung von 500 °C ein ΔL* von 23,5 auf (s. Tabelle 1).

### Beispiel 2 (mit Antimon dotiertes subpigmentäres TiO₂)

Ausgangsmaterial und Vorbehandlung sind bis zur Anteige mit destilliertem Wasser und Zusatz von 25 %iger Salzsäure bis zum Erreichen eines pH-Wertes von 2,8 bis 3,1 und der 10 minütigen Wartezeit wie in Beispiel 1.

0,1 Atom-% Sb³⁺ (2a), 1 Atom-% Sb³⁺ (2b) und 2 Atom-% Sb³⁺ (2c) (als SbCl₃) werden jeweils in 5 ml 25 %iger HCl (2a-c) bei Raumtemperatur vollständig gelöst und die Hälfte dieses Volumens der Suspension unter Rühren innerhalb 5 min zugetropft. Die Suspension wird auf 60 °C erwärmt und 30 min bei dieser Temperatur belassen.

Zu der verbleibenden, das Dotierungsmittel enthaltenden Salzsäure wird noch soviel 25 %ige Salzsäure gegeben, bis das Gewichtsverhältnis (berechnet als HCl zu TiO₂) von der an dieser Stelle zugesetzten Salzsäure, abzüglich der bei dem ersten Dotierungsschritt zugesetzten Salzsäure 0,15 zu 1 beträgt. Nun wird mit der Erwärmung auf Siedetemperatur in 30 min weiterverfahren wie in Beispiel 1. Je nach der vorangehenden thermischen Behandlung bei 120 bzw. 500 °C nimmt die Vergrauung nach 30 min Belichtung mit zunehmender Dotierungskonzentration beträchtlich ab (s. Tabelle 1). Die thermische Behandlung bewirkt eine Abnahme des Wassergehalts und eine bessere Rutilisierung bzw. eine verbesserte Rutilmischkristallbildung.

### Beispiel 3 (Dotierung mit Nickel)

Die Dotierung erfolgt wie in Beispiel 2. Die Lösung von NiCl₂·6H₂O erfolgt bei 0,1 Atom-% in 5 ml 25 %iger HCl, bei 1 Atom-% und 2 Atom-% in 20 ml HCl. Die Ergebnisse sind in der Tabelle unter 3a bis 3c zusammengefaßt. Im Vergleich zur Dotierung mit Sb ist die Photostabilität verbessert.

### Beispiel 4 (Dotierung mit Antimon und Nickel)

Als Dotierungsstoff wird eine Mischung aus Antimon³⁺ und Nickel²⁺ eingesetzt. Dazu werden bei der gemeinsamen Dotierung mit 0,1 Atom-% Sb³⁺ und 0,1 Atom-% Ni²⁺ die jeweilige Menge in 20 ml 25-%iger HCl gelöst, bei der Dotierung mit 2 Atom-% Sb³⁺ mit 2 Atom-% Ni²⁺ die jeweiligen Mengen in dem gesamten zur Peptisation notwendigen Volumen Salzsäure in Lösung gebracht. Der Vergrauungstest zeigt eine weitere Verbesserung der Photostabilität (s. Tabelle 1, 4a und b).

### Beispiel 5 (Vergleichsbeispiel, Auffällen statt Dotieren)

Subpigmentäres Titandioxid wird entsprechend der Verfahrensweise von Beispiel 1 hergestellt. Nach der Kochzeit über 90 min wird die Suspension abgekühlt und 1 Atom-% (5a) bzw. 2 Atom-% (5b) Sb³⁺ als Antimonchlorid, jeweils bezogen auf Titan, unter Rühren zugetropft. Danach erfolgt ein tropfenweiser Zusatz von 30 Gew.-%iger Natriumhydroxidlösung auf pH 7,7 bis 8,3. Danach wird filtriert, chloridfrei gewaschen und in die noch feuchte Filterpaste eine Emulsion von Dimethylpolysiloxan eingemischt (entsprechend 2 Gew.-% Siloxan bezogen auf TiO₂), sowie anschließend bei 120 °C 10 bis 16 Stunden getrocknet. Das getrocknete Produkt wird mit einer Labormühle gemahlen.

Wie in der Tabelle 1 zu erkennen ist, sind die Vergrauungswerte 5a und 5b deutlich schlechter im Vergleich zu der intrakristallinen Dotierung gleicher Mengen des Dotierungsstoffes (Beispiel 2b und 2c).

### Beispiel 6 (Steuerung der Teilgröße mit Zinndioxid und Dotierung mit Nickel)

Dieses Beispiel beschreibt zusätzlich zur Ni²⁺-Dotierung die Steuerung der Teilchengröße des subpigmentären Titandioxids. Der Anteige wird nach der Dotierung mit der ersten Teilmenge des Dotierungsstoffes und dem 30-minütigen Erzitzen auf 60 °C 4 Gew.-% (bezogen auf TiO₂) einer kolloidalen Zinndioxidlösung zugetropft. Die kolloidale Zinndioxidlösung wird folgendermaßen hergestellt: in eine Vorlage aus destilliertem Wasser wird unter Kühlung Zinntetrachlorid (p.a., 99 % SnCl₄) bis zu einer Konzentration von 200 g/l SnO₂ eingetropft. Die für die bei der Herstellung des subpigmentären Titandioxids zur Einstellung einer bestimmten Teilchengröße benötigte Zinndioxidmenge entsprechende Menge der Stammlösung wird mit destilliertem Wasser auf 10 g/l SnO₂ verdünnt. Dabei darf die Temperatur nicht über 20 °C ansteigen. Zur Reifung wird dieses Gemisch eine Stunde bei 20 °C gehalten. Die Lösung muß jetzt unmittelbar verwendet werden.

Das erhaltene subpigmentäre Titandioxid hat Rutilstruktur, ist nadelförmig und hat eine mittlere Teilchengröße von 30 nm (längste Achse).

Die Ergebnisse der Vergrauungsmessung sind geringfügig schlechter als die gemessenen Werte der Produkte in Beispiel 3. Die Ursache für die erhöhte Photoaktivität liegt in der Vergrößerung der spezifischen Oberfläche des subpigmentären Titandioxids aufgrund einer kleineren Teilchengröße.

### Beispiel 7 (Vergleichsbeispiel zu Beispiel 6 ohne Dotierungsstoff)

Von undotiertem, mit Zinndioxidkeimen hergestelltem subpigmentärem Titandioxid werden wiederum sehr schlechte Vergrauungswerte erhalten (siehe Tabelle 1).

### Beispiel 8 (Unterscheidung eines Subpigments mit einer Sb-Dotierung von einem Subpigment mit einer Sb-Auffällung)

### a) Leachversuch

Erfindungsgemäß wie in Beispiel 2c hergestelltes, mit Antimon dotiertes subpigmentäres Titandioxid und mit Antimon beschichtetes Titandioxid wie in Beispiel 5b, jeweils nach einer thermischen Behandlung bei 500 °C, wird bei 100, 140 und 180 °C jeweils 2 Stunden mit 98 %iger Schwefelsäure zur Reaktion gebracht. Die bei diesem Leachversuch in der Lösung freigewordene Menge Antimon wird mit Hilfe der Atomemissionsspektroskopie mit induktiv gekoppeltem Plasma (ICP-AES) analysiert. In Tabelle 2 ist zu erkennen, daß aufgefälltes Antimon bei dieser Prozedur erwartungsgemäß schon bei einer niedrigeren Temperatur stärker gelöst wird, als es bei dem dotierten Subpigment der Fall ist. Bei diesem Produkt geht erst allmählich mit fortschreitender Zerstörung des Titandioxidsgitters das im Gitter vorhandene Antimon in Lösung.

### b) Röntgen-Strukturanalyse

Es ist bekannt, daß es bei einer Bildung von Rutilmischphasenverbindungen des Antimons und Nickels zu einer Verschiebung eines Röntgenreflexes bei der Röntgenstrukturanalyse kommt. Dieser Reflex wird beim reinen Rutil bei einem Winkel 2θ = 54,0 bis 54,5° erwartet (H. B. Krause, H. W. Reamer, J. L. Martin, Mat. Res. Bul., Vol. 3 (1968) 233-240 und H. B. Krause, gleiche Zeitschrift, 241-252).

Bei undotiertem subpigmentärem Titandioxid (wie in Beispiel 1) wird ein Winkel von 54,4° gemessen. Subpigmentäres Titandioxid mit einer 2 Atom-%igen Antimonauffällung wie in Beispiel 5b, zeigt einen Röntgenreflex unverändert bei 2θ = 54,4°. Wird dagegen das Antimon wie in Beispiel 2c intrakristallin in das subpigmentäre Titandioxidteilchen eingebaut, ändert sich der Winkel signifikant auf 2θ = 54,3°. Diese Winkelveränderung kann nach H. B. Krause et al. mit der Bildung einer Rutilmischphasenverbindung korreliert werden.

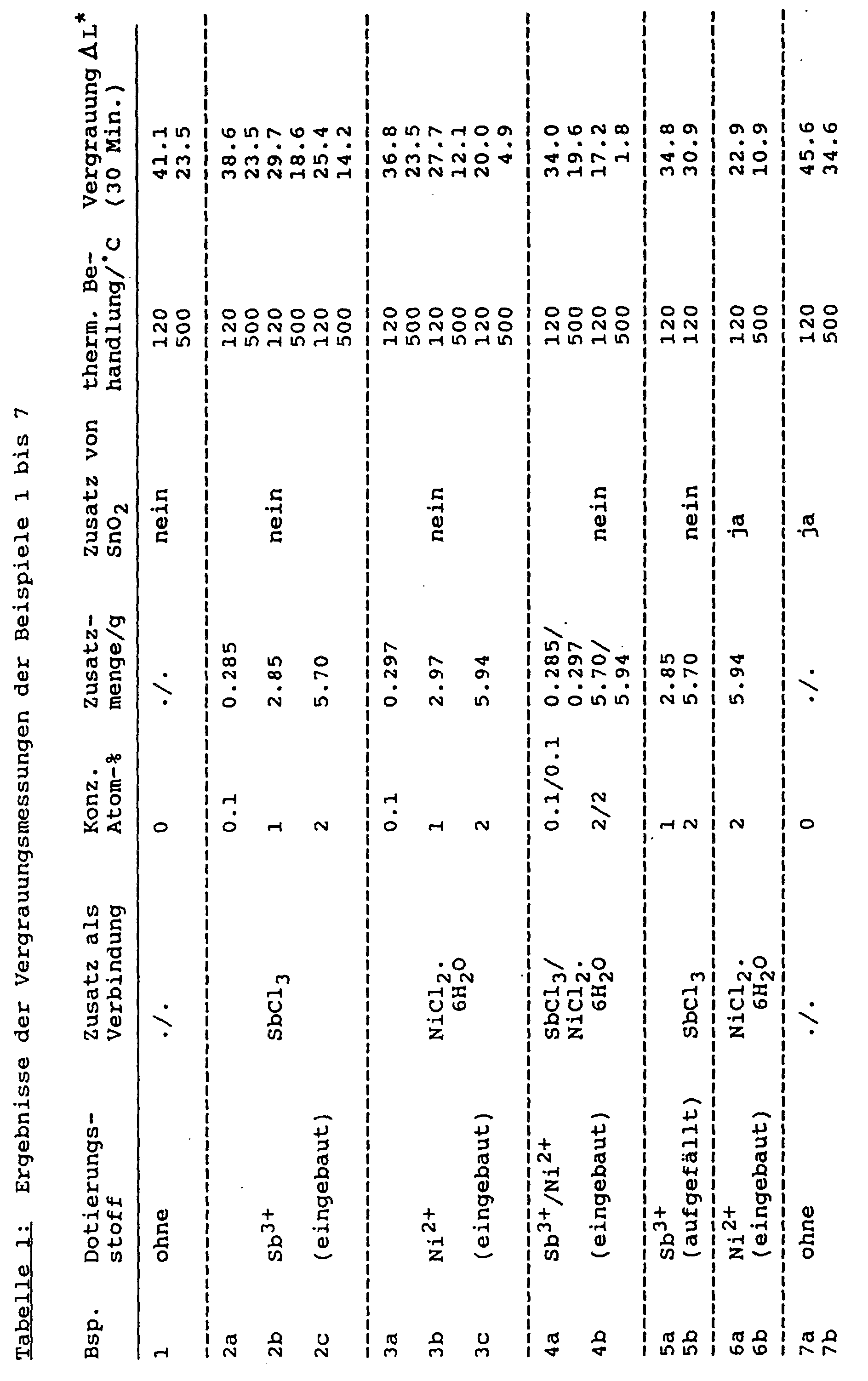

**Tabelle 2:**

| Leachversuche (Sb-Konzentration 2 Atom-%) | | |
|---|---|---|
| Temperatur in °C | gelöstes Sb/TiO₂ in % bei dotiertem Sb | gelöstes Sb/TiO₂ in % bei aufgefälltem Sb |
| 100 | 0,4 | 4,2 |
| 140 | 1,3 | 3,5 |
| 180 | 3,1 | 3,1 |
| (thermische Behandlung der Proben jeweils bei 500 °C) | | |

## Patentansprüche

1. Verfahren zur Herstellung von subpigmentärem Titandioxid mit erhöhter Photostabilität durch Dotierung, gekennzeichnet durch folgende Verfahrensschritte:
a) ein durch Hydrolyse einer Titanylsulfatlösung hergestelltes Titandioxidhydrat mit Anatasstruktur wird mit Wasser zu einer Suspension mit einer Konzentration von 20 bis 26 Gew.-% Titandioxid aufgeschlämmt;
b) die erhaltene Titandioxidhydratsuspension wird auf 60 bis 70 °C erwärmt;
c) die erwärmte Titandioxidhydratsuspension wird zu einer solchen Menge einer auf 90 bis 100 °C erhitzten wäßrigen Natriumhydroxidlösung unter Rühren zugegeben, bis nach ihrer Zugabe das Gewichtsverhältnis von Natriumhydroxid zu Titandioxid im Gemisch 1,25 bis 1,65 beträgt;
d) das Gemisch wird zum Sieden erhitzt und 120 bis 140 min beim Siedepunkt gehalten;
e) das Gemisch wird auf 50 bis 60 °C abgekühlt und filtriert;
f) der erhaltene Filterkuchen wird so lange gewaschen bis der Sulfatgehalt im Waschfiltrat weniger als 0,05 g/l beträgt;
g) der gewaschene Filterkuchen wird mit Wasser bis zu einem Titandioxidgehalt von 10 bis 25 Gewichtsprozent angeteigt und das erhaltene Gemisch mit einer 20 bis 25 %igen Salzsäure versetzt, bis ein pH-Wert von 2,8 bis 3,1 erreicht ist;
h) das Gemisch wird gerührt, der pH-Wert kontrolliert und ggf. nachgestellt;
i) es werden α % (0 < α ≦ 100) der vorgesehenen Dotierungsmenge zugesetzt, wobei der Dotierungsstoff in 25 %iger Salzsäure gelöst ist;
j) das Gemisch wird auf ca. 60 °C erhitzt und bei dieser Temperatur ca. 40 min belassen;
k) das Gemisch wird mit soviel ca. 25 %iger Salzsäure, in der die restliche Menge (100-α) % des Dotierungsstoffes enthalten ist, bei ca. 60 °C versetzt, daß sich ein Gewichtsverhältnis von Salzsäure zu Titandioxid von 0,15 : 1 bis 0,25 : 1 einstellt, wobei die Salzsäuremenge bei Schritt i zu berücksichtigen ist;
l) die Suspension wird langsam erhitzt und größenordnungsmäßig 1 h beim Siedepunkt gehalten;
m) die Suspension wird bei einem pH-Bereich von 4 - 11, vorzugsweise 6 - 8, neutralisiert und in an sich bekannter Weise filtriert, gewaschen, ggf. getrocknet und getempert, gemahlen, anorganisch und/oder organisch nachbehandelt und endgemahlen.

2. Verfahren nach Anspruch 1, dadurch gekennzeichnet, daß zur Begrenzung der Teilchengröße dem Gemisch nach dem Schritt j) eine kolloidale Zinndioxidlösung zugegeben wird, die Zinndioxidmenge kann dabei bis zu 10 % der Titandioxidmenge betragen, die Teilchengröße des Zinndioxids soll unter 10 nm, vorzugsweise unter 4 nm, sein.

3. Verfahren nach Anspruch 1 oder 2, dadurch gekennzeichnet, daß als Dotierungsstoff Eisen-, Antimon-, Zink-, Mangan-, Niob-, Vanadium-, Nickel-, Kupfer-, Tantal-Ionen bzw. Kombinationen davon eingesetzt werden.

4. Verfahren nach Ansprüchen 1 bis 3, dadurch gekennzeichnet, daß zur Erhöhung des Rutilisierungsgrades und/oder zur Verrundung der Teilchenform eine Temperung durchgeführt wird.

5. Subpigmentäres Titandioxid, enthaltend einen Dotierungsstoff zur Verbesserung der Photostabilität, gekennzeichnet durch den homogen intrakristallinen Einbau des Dotierungsstoffs in das Titandioxidteilchen.

6. Subpigmentäres Titandioxid nach Anspruch 5, dadurch gekennzeichnet, daß als Dotierungsstoff Eisen-, Antimon-, Zink-, Mangan-, Niob-, Vanadium, Nickel-, Kupfer-, Tantal-Ionen bzw. eine Kombinationen davon eingesetzt werden.

7. Subpigmentäres Titandioxid nach Anspruch 5 oder 6, dadurch gekennzeichnet, daß die Teilchen näherungsweise sphärisch sind und überwiegend Rutilstruktur haben und ihre Teilchengröße 10 bis 200 nm, bevorzugt 10 bis 100 nm beträgt.

8. Subpigmentäres Titandioxid nach Anspruch 5 oder 6, dadurch gekennzeichnet, daß die Teilchen näherungsweise nadelförmig sind und überwiegend Rutilstruktur haben und die längste Achse im Bereich 10 bis 200 nm, bevorzugt 10 bis 100 nm liegt.

9. Subpigmentäres dotiertes Titandioxid nach Ansprüchen 5 bis 8, gekennzeichnet durch einen Gehalt an Dotierungsstoff von 0,1 bis 5 Atom-%.

## Claims

1. Method for the preparation of subpigmentary titanium dioxide having increased photostability through doping, characterised by the following processing steps:
a) a titanium dioxide hydrate having an anatase structure, prepared by hydrolysis of a titanyl sulphate solution, is suspended in water to form a suspension having a concentration of from 20 to 26 wt.% of titanium dioxide;
b) the titanium dioxide hydrate suspension is heated to 60 to 70°C;
c) the heated titanium dioxide hydrate suspension is added, with stirring, to such a quantity of an aqueous sodium hydroxide solution heated to 90 to 100°C, until after addition thereof the weight ratio of sodium hydroxide to titanium hydroxide in the mixture is from 1.25 to 1.65;
d) the mixture is heated to boiling point and maintained at the boiling point for 120 to 140 min;
e) the mixture is cooled to 50 to 60°C and filtered;
f) the filter cake obtained is washed until the sulphate content in the wash filtrate is less than 0.05 g/l;
g) the washed filter cake is made into a paste with water until a titanium dioxide content of from 10 to 25 per cent by weight is obtained, and 20 to 25% hydrochloric acid is added to the mixture obtained, until a pH value of from 2.8 to 3.1 is attained;
h) the mixture is stirred, the pH value is monitored and if necessary readjusted;
i) α % (0 < α ≤ 100) of the intended quantity of doping agent is added, with the doping agent being dissolved in 25% of hydrochloric acid;
j) the mixture is heated to about 60°C and retained at this temperature for about 40 min;
k) to the mixture is added, at about 60°C, such a quantity of the approx. 25% hydrochloric acid which contains the remaining quantity (100-α) % of the doping agent, that a weight ratio of hydrochloric acid to titanium dioxide of from 0.15:1 to 0.25:1 is established, with the quantity of hydrochloric acid in step i) being taken into account;
l) the suspension is slowly heated and maintained at the boiling point for a period of the order of 1 hour;
m) the suspension is deacidified to within a pH range of 4 to 11, preferably of 6 to 8, and in a known per se manner filtered, washed, optionally dried and tempered, ground, subsequently treated with inorganic and/or organic substances and finally ground.

2. Method according to claim 1, characterised in that, in order to limit the particle size of the mixture in step j), a colloidal tin dioxide solution is added; in this connection the quantity of tin dioxide may be up to 10% of the quantity of titanium dioxide and the particle size of the tin dioxide is to be less than 10 nm, preferably less than 4 nm.

3. Method according to claim 1 or 2, characterised in that iron ions, antimony ions, zinc ions, manganese ions, niobium ions, vanadium ions, nickel ions, copper ions, tantalum ions or combinations thereof are used as doping agent.

4. Method according to claims 1 to 3, characterised in that a tempering is carried out to increase the degree of rutile formation and/or for rounding the particle shape.

5. Subpigmentary titanium dioxide, containing a doping agent for improving the photostability, characterised by the homogeneously intracrystalline insertion of the doping agent into the titanium dioxide particles.

6. Subpigmentary titanium dioxide according to claim 5, characterised in that iron ions, antimony ions, zinc ions, manganese ions, niobium ions, vanadium ions, nickel ions, copper ions, tantalum ions or combinations thereof are used as doping agent.

7. Subpigmentary titanium dioxide according to claim 5 or 6, characterised in that the particles are approximately spherical and have a predominantly rutile structure and their particle size is from 10 to 200 nm, preferably from 10 to 100 nm.

8. Subpigmentary titanium dioxide according to claim 5 or 6, characterised in that the particles are approximately acicular and have a predominantly rutile structure and the longest axis is in the range of 10 to 200 nm, preferably 10 to 100 nm.

9. Subpigmentary doped titanium dioxide according to claims 5 to 8, characterised by a content of doping agent of from 0.1 to 5 atom-%.

## Revendications

1. Procédé de préparation de dioxyde de titane sous-pigmentaire présentant une photostabilité améliorée par dopage, caractérisé par les étapes suivantes :
a) un dioxyde de titane hydraté de structure anatase, préparé par hydrolyse d'une solution de sulfate de titanyle, est transformé, avec de l'eau, en une suspension ayant une concentration de 20 % à 26 % en poids de dioxyde de titane ;
b) la suspension obtenue de dioxyde de titane hydraté est chauffée à une température de 60°C à 70°C ;
c) la solution chauffée de dioxyde de titane hydraté est ajoutée sous agitation à une quantité d'une solution aqueuse, chauffée à une température de 90°C à 100°C, d'hydroxyde de sodium, suffisante pour que, après son addition, le rapport pondéral de l'hydroxyde de sodium au dioxyde de titane dans le mélange soit de 1,25 à 1,65 ;
d) le mélange est chauffé jusqu'à ébullition et maintenu au point d'ébullition pendant 120 min à 140 min ;
e) le mélange est refroidi à une température de 50°C à 60°C, et filtré ;
f) le gâteau de filtration obtenu est lavé jusqu'à ce que la teneur en sulfate du filtrat de lavage soit inférieure à 0,05 g/l ;
g) le gâteau de filtration, lavé, est transformé avec de l'eau en une pâte jusqu'à une teneur en dioxyde de titane de 10 % à 25 % en poids, et le mélange obtenu est additionné d'un acide chlorhydrique à 20-25 % jusqu'à arriver à un pH de 2,8 à 3,1 ;
h) on agite le mélange, on régule le pH et éventuellement on l'ajuste ;
i) on ajoute α % (0 < α ≤ 100) de la quantité prévue de dopage, le dopant étant dissous dans de l'acide chlorhydrique à 25 % ;
j) le mélange est chauffé à environ 60°C et abandonné à cette température pendant 40 min;
k) le mélange est additionné d'une quantité d'acide chlorhydrique à environ 25 %, contenant la quantité résiduelle (100-α) % du dopant, environ 60°C, suffisante pour ajuster un rapport pondéral de l'acide chlorhydrique au dioxyde de titane de 0,15:1 à 0,25:1, la quantité d'acide chlorhydrique de l'étape i) devant être prise en compte ;
l) la suspension est lentement chauffée et maintenue pendant environ 1 heure au point d'ébullition ;
m) la suspension est neutralisée sur un intervalle de pH de 4 à 11 et de préférence de 6 à 8, et, d'une manière connue en soi, filtrée, lavée, éventuellement séchée et recuite, broyée, soumise à un post-traitement minéral et/ou organique, et soumise à un broyage final.

2. Procédé selon la revendication 1, caractérisé en ce que, pour limiter la granulométrie, on ajoute au mélange selon l'étape j) une solution colloïdale de dioxyde d'étain, la quantité de dioxyde d'étain peut alors aller jusqu'à environ 10 % de la quantité de dioxyde de titane, et la granulométrie du dioxyde d'étain doit être inférieure à 10 nm et de préférence inférieure à 4 nm.

3. Procédé selon la revendication 1 ou 2, caractérisé en ce qu'on utilise comme dopant des ions fer, antimoine, zinc, manganèse, niobium, vanadium, nickel, cuivre, tantale, ou des associations de ces derniers.

4. Procédé selon les revendications 1 à 3, caractérisé en ce que, pour augmenter le taux de rutilisation et/ou pour arrondir la forme des particules, on procède à un recuit.

5. Dioxyde de titane sous-pigmentaire, contenant un dopant pour améliorer la photostabilité, caractérisé par l'incorporation intracristalline homogène du dopant dans les particules de dioxyde de titane.

6. Dioxyde de titane sous-pigmentaire selon la revendication 5, caractérisé en ce qu'on utilise comme dopant des ions fer, antimoine, zinc, manganèse, niobium, vanadium, nickel, cuivre, tantale, ou une de leurs associations.

7. Dioxyde de titane sous-pigmentaire selon la revendication 5 ou 6, caractérisé en ce que les particules sont approximativement sphériques et ont essentiellement la structure rutile, et leur granulométrie est de 10 nm à 200 nm et de préférence de 10 nm à 100 nm.

8. Dioxyde de titane sous-pigmentaire selon la revendication 5 ou 6, caractérisé en ce que les particules sont approximativement aciculaires et ont essentiellement une structure rutile, et leur grand axe est compris dans l'intervalle de 10 nm à 200 nm et de préférence de 10 nm à 100 nm.

9. Dioxyde de titane sous-pigmentaire dopé selon les revendications 5 à 8, caractérisé en ce qu'il contient de 0,1 % à 5 % en atomes de dopant.
